# EUROPÄISCHE PATENTSCHRIFT

(11) **EP 0 778 941 B1**
(45) Veröffentlichungstag und Bekanntmachung des Hinweises auf die Patenterteilung: **02.05.2003**
(21) Anmeldenummer: 96921871.8
(22) Anmeldetag: 26.06.1996
(51) Int. Cl.: G01N 27/22

(54) **MESSEINRICHTUNG UND VERFAHREN ZUR BESTIMMUNG DES WASSERGEHALTES IN EINEM GAS**
METHOD AND MEASURING DEVICE FOR DETERMINING THE WATER CONTENT OF A GAS
APPAREIL DE MESURE ET PROCEDE POUR LA DETERMINATION DE LA TENEUR EN EAU D'UN GAZ

(30) Priorität: 30.06.1995 DE 19523601
(43) Veröffentlichungstag der Anmeldung: 18.06.1997
(73) Patentinhaber: Züchner, Klaus, 37073 Göttingen (DE); Schulze, Thomas, 37191 Katlenburg (DE); Kahle, Gerrit, 37081 Göttingen (DE)
(72) Erfinder: Züchner, Klaus, 37073 Göttingen (DE); Schulze, Thomas, 37191 Katlenburg (DE); Kahle, Gerrit, 37081 Göttingen (DE)
(74) Vertreter: Patentanwälte Thömen & Körner
(86) Internationale Anmeldenummer: DE9601163
(87) Internationale Veröffentlichungsnummer: WO97002486

(56) Entgegenhaltungen:
- US-A- 4 563 634
- US-A- 5 296 819
- PATENT ABSTRACTS OF JAPAN vol. 13, no. 426 (P-935), 22.September 1989 & JP,A,11 058340 (MURATA MFG CO LTD), 21.Juni 1989,

## Beschreibung

Die Erfindung betrifft eine Meßeinrichtung zur Bestimmung des Wassergehaltes in einem Gas nach dem Oberbegriff des Anspruchs 1 und ein Verfahren zur Bestimmung des Wassergehaltes in einem Gas nach dem Oberbegriff des Anspruchs 10.

Aus der DE 195 13 274 A1 ist ein Verfahren zur Messung des Taupunkts oder einer Gaskonzentration und Einrichtung zur Vorhersage einer Vereisung bekannt. Das bekannte Verfahren und die bekannte Einrichtung ermöglichen auch die Bestimmung der relativen und absoluten Feuchte.

Als Feuchtesensor dient ein kapazitiver Sensor, der mittels eines Heizelementes aufgeheizt wird. Dabei wird der Sensor so weit aufgeheizt, daß seine Meßempfindlichkeit am größten ist. Im Ausführungsbeispiel ist dies dann der Fall, wenn die relative Feuchte im Bereich zwischen 60 und 80 % liegt. Die relative Feuchte wird dann durch Auswertung zweier Variablen bestimmt, nämlich durch die vom Feuchtesensor bei seiner Betriebstemperatur ermittelte relative Feuchte und durch die Temperatur des Sensors, die mit einem gesonderten Thermofühler ermittelt wird.

Aus der US-A-5 296 819 ist ferner eine Vorrichtung zur Bestimmung der Feuchte eines Gases mit einem kapazitiven Sensor bekannt, der mit einem Heizelement und einem gesonderten Temperaturfühler gekoppelt ist. Der kapazitive Sensor wird auf einer konstanten Temperatur gehalten, die oberhalb des Taupunktes liegt. Aus der vom Wassergehalt abhängigen Kapazität des kapazitiven Sensors kann ein Wert für die relative Feuchte ermittelt werden.

Der Erfindung liegt die Aufgabe zugrunde, eine Meßeinrichtung und ein Verfahren zur Bestimmung des Wassergehaltes in einem Gas anzugeben, das die Ermittlung der Feuchte mit nur einer Variablen ermöglicht und präziser arbeitet.

Diese Aufgabe wird bei einer Meßeinrichtung nach dem Oberbegriff des Anspruchs 1 und einem Meßverfahren nach dem Oberbegriff des Anspruchs 10 durch die im jeweiligen kennzeichnenden Teil angegebenen Merkmale gelöst.

Weiterbildungen und vorteilhafte Ausgestaltungen ergeben sich aus den jeweiligen Unteransprüchen.

Bei der erfindungsgemäßen Vorrichtung wird statt eines getrennten Heizelementes und Temperaturfühlers ein temperaturabhängiger Widerstand verwendet. Dabei wird die temperaturabhängige Charakteristik des Widerstandes ausgenutzt, um über die bei Erwärmung auftretende Widerstandsänderung die aktuelle Temperatur zu erfassen. Dadurch kann die Temperatur direkt, also ohne Übergangsverlust und Zeitverzögerung, wie sie bei Wärmeübertragung von einem Element auf ein anderes auftreten würden, ermittelt werden. Darüberhinaus wird durch die Beschränkung auf einen einzigen gemeinsamen temperaturabhängigen Widerstand auch eine besonders kleine Bauform der Meßsensoranordnung ermöglicht, was ebenfalls ein schnelles Ansprechen auf Änderungen aufgrund geringer Wärmekapazität begünstigt. Dieses Verhalten eröffnet die Möglichkeit, die Meßeinrichtung auch als Bestandteil einer schnellen Regelung zur Schaffung einer konstanten Feuchte einzusetzen.

Durch die thermische Kopplung des kapazitiven Sensors mit dem erwärmten und auf eine konstante Temperatur geregelten Widerstand wird der kapazitive Sensor auf derselben konstanten Temperatur gehalten. Dadurch muß bei Auswertung des Meßergebnisses nur noch eine Variable, nämlich die Änderung der Kapazität in Abhängigkeit der Feuchte ausgewertet werden. Die Auswertung kann sich dabei auf eine Interpolation oder Extrapolation von Werten beschränken, die bei einer zuvor durchgeführten Kalibrierung bei derselben Temperatur ermittelt wurden. Für die Auswertung wird somit das bei konstanter Temperatur auftretende reproduzierbare Verhalten zwischen der Kapazität und der relativen oder absoluten Feuchte ausgenutzt. Abhängig vom verwendeten Sensor und der gewählten Betriebstemperatur kann das reproduzierbare Verhalten einer linearen oder nichtlinearen Funktion folgen und ein Maß für die relative oder die absolute Feuchte darstellen. Der jeweils andere Feuchtewert, also die absolute Feuchte bei zuvor ermittelter relativer Feuchte oder die relative Feuchte bei zuvor ermittelter absoluter Feuchte, kann in an sich bekannter Weise über den zuvor ermittelten Feuchtewert und den Wasserdampfpartialdruck ermittelt werden.

Vorzugsweise umfaßt die Meßsensoranordnung einen plattenförmigen Träger aus hochwärmeleitfähiger Keramik, auf dessen einer Seite der kapazitive Sensor und auf dessen anderer Seite der temperaturabhängige Widerstand angeordnet sind.

Hierdurch wird ein kompakter Aufbau erzielt, wobei die keramische Trägerplatte eine elektrische Isolierung zwischen den beiden Elementen bewirkt, andererseits aber einen großflächigen thermischen Leiter darstellt, um die Temperatur des kapazitiven Sensors eng an die Temperatur des Widerstandes zu koppeln.

Ferner kann die Meßsensoranordnung eine Umhüllung tragen, die thermisch isolierend aber auf der Seite des kapazitiven Sensors unterbrochen oder aber feuchtigkeitsdurchlässig ist.

Hierdurch wird die Wärmeabstrahlung an die Umgebung reduziert, wodurch der temperaturabhängige Widerstand mit einer geringeren Heizleistung betrieben werden kann. Außerdem ergibt sich durch die thermische Entkopplung von der Umgebung eine relativ bessere Kopplung zwischen dem Widerstand und dem kapazitiven Sensor.

Bei einer ersten Ausführung der Meßeinrichtung ist der temperaturabhängige Widerstand in einer Meßbrücke angeordnet und die Energiequelle ist als Pulsgenerator ausgebildet, mit der die Meßbrücke verbunden ist. Die zweite Auswerteschaltung ist eingangsseitig an die Brückendiagonale angeschlossen und ausgangsseitig mit einem Regler verbunden, der das Puls-Pausen-Verhältnis des Pulsgenerators steuert.

Durch die Meßbrücke wird der Einfluß des Absolutwertes der Speisespannung für den temperaturabhängigen Widerstand auf das Meßergebnis vermindert. Gleiches gilt auch für überlagerte Störspannungen. Die nutzbare Meßempfindlichkeit wird dadurch erhöht.

Die Steuerung der effektiven Heizleistung des temperaturabhängigen Widerstand über eine Beeinflussung des Puls-Pausen-Verhältnisses der Speisespannung ist bei vergleichbarem Schaltungsaufwand für einen begrenzten Regelbereich präziser, als eine Absolutwert- oder Amplitudensteuerung und -messung.

Bei einer zweiten Ausführung der Meßeinrichtung ist der temperaturabhängige Widerstand ebenfalls in einer Meßbrücke angeordnet, aber die Energiequelle ist als Gleichspannungs- oder Gleichstromquelle ausgebildet und mit der Meßbrücke verbunden und ferner ist ein Pulsgenerator vorgesehen, dessen Signal konstanter Amplitude der Gleichspannung oder dem Gleichstrom der Energiequelle überlagert ist. Die zweite Auswerteschaltung ist als Demodulator für das Signal des Pulsgenerators ausgebildet und eingangsseitig an die Brückendiagonale angeschlossen sowie ausgangsseitig mit einem Regler verbunden, der die Gleichspannung oder den Gleichstrom der Energiequelle steuert. Diese Ausführung benutzt eine Hilfsspannung, die sich vom Gleichstrom oder von der Gleichspannung der Energiequelle entkoppeln und daher unabhängig von regelungsbedingten Spannungs- oder Stromänderungen auswerten läßt. Dies ermöglicht eine störungsfreie und damit genauere Auswertung.

Vorzugsweise umfaßt die erste Auswerteschaltung einen Pulsgenerator, dessen zeitbestimmendes Glied der kapazitive Sensor ist. Dabei erfolgt eine Messung der Pulsfrequenz oder des Puls-Pausen-Verhältnisses, was ein gegen Störspannungen unempfindliches Verfahren darstellt.

Gemäß einer Weiterbildung kann eine dritte Auswerteschaltung vorgesehen sein, die die Regelabweichung des Reglers und/oder die Heizleistung bestimmt und durch Vergleich mit zuvor erfaßten Kalibrierwerten die Strömungsgeschwindigkeit des Gases ermittelt.

Hierbei wird die Strömungsgeschwindigkeit indirekt über die Konvektionswärme gemessen, die ja durch erhöhte Heizleistung ausgeglichen werden muß, um die geforderte konstante Temperatur aufrechtzuerhalten. Bei dieser Variante darf die Isolation der Umhüllenden nicht zu stark ausgeprägt sein, damit eine deutliche Konvektion stattfinden kann. Da die Konvektion in geringem Maße auch vom Feuchtegehalt des Gases abhängig ist, kann gemäß einer Weiterbildung das Meßergebnis durch Berücksichtigung der relativen Feuchte verbessert werden.

Nachfolgend wird die Erfindung anhand der Zeichnung erläutert.

In der Zeichnung zeigen:
- Fig. 1: eine Seitenansicht einer Meßsensoranordnung,
- Fig. 2: ein Blockschaltbild einer ersten Ausführung der mit dem temperaturabhängigen Widerstand verbundenen Peripherie,
- Fig. 3: ein Blockschaltbild einer zweiten Ausführung der mit dem temperaturabhängigen Widerstand verbundenen Peripherie,
- Fig. 4: Zeit-Spannungs-Diagramme der Schaltung nach Fig. 3 und
- Fig. 5: ein Blockschaltbild der Auswerteschaltung für den kapazitiven Sensor

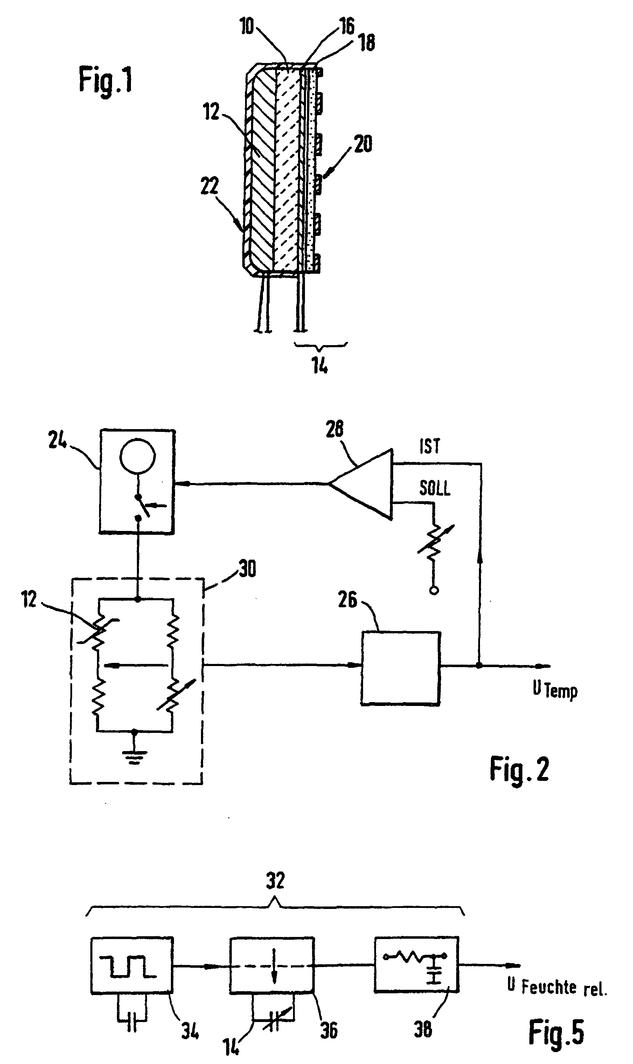

Fig. 1 zeigt eine Seitenansicht einer Meßsensoranordnung. Diese umfaßt einen plattenförmigen Träger 10 aus hochwärmeleitfähiger Keramik, auf dem ein temperaturabhängiger Widerstand 12 aus Platin und ein kapazitiver Sensor 14 einander gegenüberliegend angeordnet sind. Der kapazitive Sensor 14 besitzt eine durchgehende Elektrode 16, die unmittelbar an dem plattenförmigen Träger 10 befestigt ist, ein Dielektrikum 18, welches seinen Dielektrizitätswert in Abhängigkeit der Feuchte ändert, und eine weitere äußere poröse Elektrode 20, die wasserdampfdurchlässig ist. Ferner trägt die Meßsensoranordnung eine Umhüllung 22, die jedoch an der porösen Elektrode 20 unterbrochen ist. Die Umhüllung 22 dient dazu, als thermischer Isolator den Wärmeübergang an die Umgebung zu vermindern.

Fig. 2 zeigt ein Blockschaltbild einer ersten Ausführung der mit dem temperaturabhängigen Widerstand verbundenen Peripherie. Diese umfaßt eine Energiequelle 24, eine Auswerteschaltung 26 und einen Regler 28. Der temperaturabhängige Widerstand 12 ist in einer Meßbrücke 30 angeordnet, deren Brückenzweige von der Energiequelle 24 gespeist werden. Die Brückendiagonale ist mit dem Eingang der Auswerteschaltung 26 verbunden. Die Auswerteschaltung 26 ermittelt über die Brückenspannung, die sich in Abhängigkeit der Widerstandsänderung des temperaturabhängigen Widerstandes 12 ändert, die aktuelle Temperatur des Widerstandes 12, die wegen der thermischen Kopplung mit dem kapazitiven Sensor 14 auch weitgehend der Temperatur des kapazitiven Sensors 14 entspricht.

Der Ausgang der Auswerteschaltung 26 ist mit dem Eingang des Reglers 28 verbunden, dessen Ausgang die Energiequelle 24 steuert. Im hier dargestellten Ausführungsbeispiel wird die Energiequelle 24 ein- und ausgeschaltet, so daß die Heizleistung über das Puls-Pausen-Verhältnis einer geschalteten Gleichspannung geregelt wird. Es ist auch möglich, als Energiequelle einen Pulsgenerator zu verwenden, dessen Puls-Pausen-Verhältnis über ein Stellglied gesteuert wird.

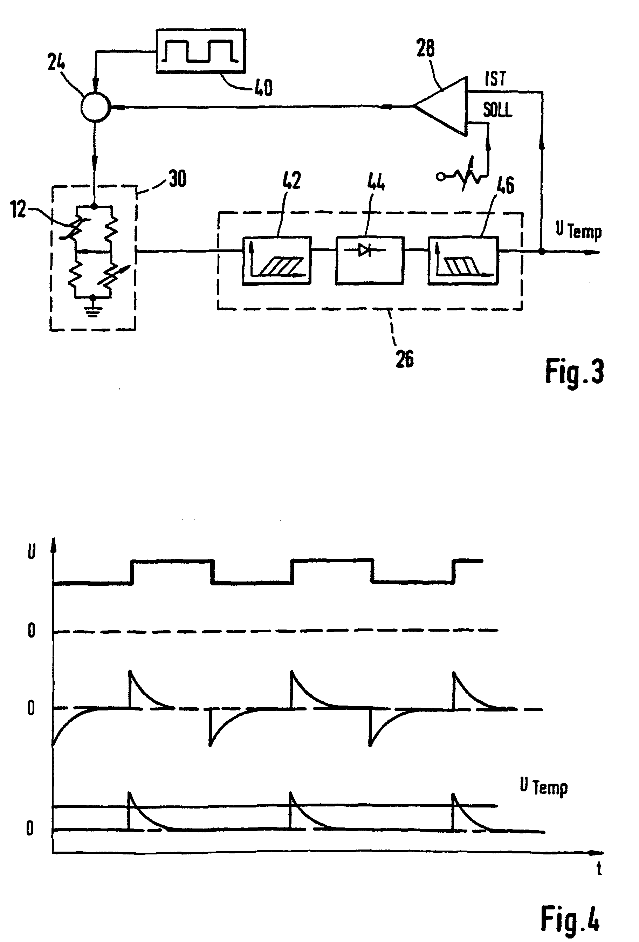

Das in Fig. 3 dargestellte Blockschaltbild einer zweiten Ausführung der mit dem temperaturabhängigen Widerstand verbundenen Peripherie unterscheidet sich von Fig. 2 dadurch, daß die Energiequelle 24 als Gleichspannungsquelle ausgebildet ist und daß ein Pulsgenerator 40 vorgesehen ist, dessen Signal konstanter Amplitude der Gleichspannung der Energiequelle 24 überlagert ist, wie aus dem oberen Spannungs-Zeit-Diagramm in Fig. 4 hervorgeht. Die aus einem variablen Gleichspannungsanteil und einem konstanten Wechselspannungsanteil zusammengesetzte Spannung speist die Meßbrücke 30.

Mittels der Auswerteschaltung 26, deren Eingang mit der Brückendiagonale der Meßbrücke 30 verbunden ist, wird das Signal des Pulsgenerators 40 demoduliert. Das demodulierte Signal ist ausschließlich ein Maß für die Temperatur des temperaturabhängigen Widerstandes 12 und unabhängig vom aktuellen Gleichspannungswert der Energiequelle 24. Das temperaturabhängige Signal kann über den Regler 28 in Abhängigkeit des Sollwertes den Wert der Gleichspannung der Energiequelle 24 steuern.

Die Auswerteschaltung 26 besteht hier aus einem Hochpaß 42 zur Trennung des der Gleichspannung überlagerten Wechselspannungssignals, dessen ausgangsseitiger Verlauf aus dem mittleren Spannungs-Zeit-Diagramm in Fig. 4 hervorgeht, einem nachgeschalteten Gleichrichter 44, dessen Ausgangssignal aus dem pulsierenden Verlauf des unteren Spannungs-Zeit-Diagramm in Fig. 4 ersichtlich ist, und aus einem Tiefpaß 46, der aus dem pulsierenden Signal des Gleichrichters 44 ein weitgehend konstantes Gleichspannungssignal formt, wie es ebenfalls im unteren Spannungs-Zeit-Diagramm in Fig. 4 dargestellt ist.

Zur Vermeidung hochfrequenter Störungen kann statt des Hochpasses 42 ein Bandpaß und statt des Gleichrichters 44 ein Synchron-Demodulator eingesetzt werden, der dann vom Pulsgenerator 40 getaktet wird. Die Auswerteschaltung 26 kann mit entsprechend miniaturisierten Bauelementen auch in die Meßsensoranordnung integriert werden, wodurch die Störsicherheit nochmals verbessert wird. Durch eine kleine Amplitude der zum Messen benötigten rechteckigen Wechselspannung ist die Grunderwärmung, welche sich aus der Hilfsenergie der Widerstandsmessung ergibt, verkleinerbar

Fig. 5 zeigt ein Blockschaltbild der Auswerteschaltung 32 für den kapazitiven Sensor 14. Die Auswerteschaltung 32 umfaßt eine astabile Kippstufe 34, eine monostabile Kippstufe 36 und eine Meßeinheit 38. Dabei ist der kapazitive Sensor 14 in die monostabile Kippstufe 36 als zeitbestimmendes Bauteil integriert. Die astabile Kippstufe 34 triggert die monostabile Kippstufe 36 in konstanten Zeitabständen. Die monostabile Kippstufe 36 schaltet in durch den kapazitiven Sensor 14 bestimmten Zeitabständen wieder in den stabilen Zustand, wodurch Pulse mit variablen Puls-Pausen-Verhältnissen entstehen. Die Meßeinheit 38 kann als Tiefpaß ausgebildet sein, der aus den Puls-Pausen-Verhältnissen einen analogen Wert ermittelt, oder auch als digitale Zeitmeßschaltung.

Zur Erzielung einer hohen Meßgenauigkeit ist bereits eine Zweipunktkalibrierung ausreichend. Dazu wird die Meßsensoranordnung auf ihre Betriebstemperatur aufgeheizt und bei niedrigem und hohem Wassergehalt jeweils ein Meßwert ermittelt. Als unterer Kalibrationspunkt kann trockene Luft, als oberer Kalibrationspunkt der Wassergehalt über einer gesättigten Salzlösung gewählt werden.

Je nach den für diese Kalibrationspunkte typischen Feuchtewerten, die eventuell noch durch Kontrollmessungen überprüft werden können, wird das dem unteren Kalibrationspunkt zugeordnete Meßergebnis dann einer relativen Feuchte von nahe 0 % und das beim oberen Kalibrationspunkt erhaltene Meßergebnis einer relativen Feuchte von nahe 90 % zugewiesen. Die Zwischenwerte sind dann durch lineare Interpolation zwischen den beiden Kalibrationspunkten festgelegt. Im Falle einer nichtlinearen Abhängigkeit müßten noch weitere Kalibrationspunkte eingestellt und durch Kontrollmessungen überprüft werden. Die Betriebstemperatur muß so gewählt werden, daß sie immer höher als der Taupunkt des Meßgases ist.

Sofern Messungen in unterschiedlichen Gasen oder Gasgemischen durchgeführt werden sollen, können auch gasspezifische Kalibrierungen vorgenommen oder die für ein Gas vorgenommene Kalibrierung mit gasspezifische Korrekturwerten modifiziert werden.

Die absolute Feuchte kann unter Berücksichtigung des Wasserdampfpartialdruckes aus der relativen Feuchte ermittelt werden und umgekehrt. Dies ist entweder über eine Tabelle oder eine Berechnung möglich, bei der der Zusammenhang der relativen Feuchte und der absoluten Feuchte über den Wasserdamfpartialdruck annähernd über ein Polynom vierten Grades nachgebildet wird.

Die Durchführung der Berechnung erfolgt zweckmäßig in einem PC, der mit der Auswerteschaltung verbunden ist. Mittels dieses PC könnte auch durch Auswertung der Heizleistung für den temperaturabhängigen Widerstand die Strömungsgeschwindigkeit ermittelt werden, mit der das Gas an der Meßsensoranordnung vorbeiströmt. Dabei könnte eine Korrektur dieses Meßwertes durch die gleichzeitig ermittelte Feuchte erfolgen.

Ein praktisches Anwendungsgebiet für die beschriebene Erfindung ist der medizinische Bereich. Bei maschinell beatmeten Patienten werden zum Beispiel durch den Beatmungstubus die oberen Luftwege überbrückt und dadurch die Klimatisierungsfunktion der Nase ausgeschaltet. Da die Gase aus zentraler Gasversorgung oder Druckflaschen des Krankenhauses praktisch wasserfrei sind, müssen bei solcher Art beatmeten Patienten geeignete Anfeuchtungsmaßnahmen ergriffen werden.

Bei einer Atemgasanfeuchtung mit Wärme- und Feuchtigkeitstauschern, sogenannten künstlichen Nasen, kann der gemessene unterschiedliche Feuchtigkeitsgehalt als Kriterium zur Unterscheidung der Ein- und Ausatmungströmungsrichtung verwendet werden.

Bei aktiven Klimatisierungsgeräten, die Feuchtigkeit aus einem Wasserreservoir dosiert der Atemluft zusetzen, kann die Meßeinrichtung in einem Regelkreis zur Einstellung des geeigneten Feuchtewertes oder zur Überwachung eines manuell eingestellten Feuchtewertes verwendet werden.

Bei diesem Anwendungsfall kann ferner die Strömungsgeschwindigkeit als Kriterium zur Unterscheidung der Einund Ausatmung herangezogen werden und somit auch zur Unterscheidung des Feuchtegehalts in der eingeatmeten und der ausgeatmeten Luft.

## Patentansprüche

1. Meßeinrichtung zur Bestimmung des Wassergehaltes in einem Gas, bestehend aus einer Meßsensoranordnung aus einem kapazitiven Sensor (14), der thermisch mit einem Heizelement und einem Temperaturfühler gekoppelt ist, und bestehend aus einer mit dem Heizelement verbundenen Energiequelle (24) sowie einer ersten mit dem kapazitiven Sensor (14) verbundenen Auswerteschaltung (32) und einer zweiten mit dem Temperaturfühler verbundenen Auswerteschaltung (26), **dadurch gekennzeichnet, daß** das Heizelement und der Temperaturfühler durch einen gemeinsamen temperaturabhängigen Widerstand (12) gebildet sind, daß die zweite Auswerteschaltung (26) zusammen mit dem temperaturabhängigen Widerstand (12) und der Energiequelle (24) eine Regelschaltung zur Konstanthaltung der Temperatur des kapazitiven Sensors (14) bilden, und daß die erste Auswerteschaltung (32) in Abhängigkeit der Kapazität des kapazitiven Sensors (14) als einziger Variable den aktuellen Wert der relativen oder absoluten Feuchte des Gases aus zuvor ermittelten Kalibrierwerten bei derselben konstanten Temperatur inter- oder extrapoliert und/oder auf der Basis der relativen oder absolute Feuchte des Gases und des Wasserdampfpartialdruckes den jeweils anderen Feuchtewert des Gases ermittelt.

2. Meßeinrichtung nach Anspruch 1, **dadurch gekennzeichnet, daß** die Meßsensoranordnung einen plattenförmigen Träger (10) aus hochwärmeleitfähiger Keramik umfaßt, auf dessen einer Seite der kapazitive Sensor (14) und auf dessen anderer Seite der temperaturabhängige Widerstand (12) angeordnet sind.

3. Meßeinrichtung nach Anspruch 1 oder 2, **dadurch gekennzeichnet, daß** die Meßsensoranordnung eine Umhüllung (22) trägt, die thermisch isolierend aber auf der Seite des kapazitiven Sensors (14) unterbrochen oder feuchtigkeitsdurchlässig ist.

4. Meßeinrichtung nach einem der Ansprüche 1 bis 3, **dadurch gekennzeichnet, daß** der temperaturabhängige Widerstand (12) in einer Meßbrücke (30) angeordnet ist, daß die Energiequelle (24) als Pulsgenerator ausgebildet und mit der Meßbrücke (30) verbunden ist und daß die zweite Auswerteschaltung (26) eingangsseitig an die Brückendiagonale angeschlossen und ausgangsseitig mit einem Regler (28) verbunden ist, der das Puls-Pausen-Verhältnis des Pulsgenerators steuert.

5. Meßeinrichtung nach einem der Ansprüche 1 bis 3, **dadurch gekennzeichnet, daß** der temperaturabhängige Widerstand (12) in einer Meßbrücke (30) angeordnet ist, daß die Energiequelle (24) als Gleichspannungs- oder Gleichstromquelle ausgebildet ist, daß ein Pulsgenerator (40) vorgesehen ist, dessen Signal konstanter Amplitude der Gleichspannung oder dem Gleichstrom der Energiequelle (24) überlagert und mit der Meßbrücke (30) verbunden ist und daß die zweite Auswerteschaltung (26) als Demodulator für das Signal des Pulsgenerators (40) ausgebildet und eingangsseitig an die Brückendiagonale angeschlossen sowie ausgangsseitig mit einem Regler (28) verbunden ist, der die Gleichspannung oder den Gleichstrom der Energiequelle (24) steuert.

6. Meßeinrichtung nach einem der Ansprüche 1 bis 5, **dadurch gekennzeichnet, daß** die erste Auswerteschaltung (32) einen Pulsgenerator umfaßt, dessen zeitbestimmendes Glied der kapazitive Sensor (14) ist und eine Messung der Pulsfrequenz oder des Puls-Pausen-Verhältnisses erfolgt.

7. Meßeinrichtung nach Anspruch 5, **dadurch gekennzeichnet, daß** eine dritte Auswerteschaltung vorgesehen ist, die die Regelabweichung des Reglers (28) bestimmt und durch Vergleich mit zuvor erfaßten Kalibrierwerten die Strömungsgeschwindigkeit des Gases ermittelt.

8. Meßeinrichtung nach einem der Ansprüche 1 bis 7, **dadurch gekennzeichnet, daß** eine dritte Auswerteschaltung vorgesehen ist, die die Heizleistung bestimmt und durch Vergleich mit zuvor erfaßten Kalibrierwerten die Strömungsgeschwindigkeit des Gases ermittelt.

9. Meßeinrichtung nach Anspruch 7 oder 8, **dadurch gekennzeichnet, daß** die dritte Auswerteschaltung mit der ersten Auswerteschaltung (32) gekoppelt ist und die Ausgabewerte der ersten Auswerteschaltung (32) zur Ermittlung der Strömungsgeschwindigkeit des Gases herangezogen werden.

10. Verfahren zur Bestimmung des Wassergehaltes in einem Gas mit einer Meßeinrichtung, die aus einer Meßsensoranordnung aus einem kapazitiven Sensor (14), der thermisch mit einem Heizelement und einem Temperaturfühler gekoppelt ist, besteht, wobei der kapazitive Sensor (14) auf einer konstanten Temperatur gehalten wird, die oberhalb des Taupunktes liegt und aus der vom Wassergehalt abhängigen Kapazität des kapazitiven Sensors (14) ein Wert für die relative oder absolute Feuchte ermittelt wird, **dadurch gekennzeichnet, daß** das Heizelement und der Temperaturfühler durch einen gemeinsamen temperaturabhängigen Widerstand (12) gebildet werden und daß der kapazitive Sensor (14) durch Regelung dieses Widerstandes (12) auf der konstanten Temperatur gehalten wird und daß der Wert für die relative oder absolute Feuchte durch Inter- oder Extrapolation von Kalibrierwerten gebildet wird, die zuvor bei derselben Temperatur ermittelt wurden und/oder auf der Basis der relativen oder absoluten Feuchte des Gases und des Wasserdampfpartialdruckes der jeweils andere Feuchtewert des Gases ermittelt wird.

11. Verfahren nach Anspruch 10, **dadurch gekennzeichnet, daß** über eine Bestimmung der Heizleistung des Heizelementes die Strömungsgeschwindigkeit des Gases ermittelt wird.

12. Verfahren nach Anspruch 11, **dadurch gekennzeichnet, daß** unter Berücksichtigung der ermittelten Werte für die Feuchte die Werte für die Strömungsgeschwindigkeit modifiziert werden.

## Claims

1. Measuring device for determining the water content of a gas, comprising a measuring sensor arrangement of a capacitive sensor (14), which is thermally coupled to a heating element and a temperature probe, and comprising a power source (24) connected to the heating element, as well as a first evaluating circuit (32) connected to the capacitive sensor (14) and a second evaluating circuit (26) connected to the temperature probe, **characterized in that** the heating element and the temperature probe are formed by a common temperature-dependent resistor (12), that the second evaluating circuit (26) together with the temperature-dependent resistor (12) and the power source (24) form a regulating circuit for maintaining constant the temperature of the capacitive sensor (14) and that the first evaluating circuit (32), as a function of the capacitance of the capacitive sensor (14) interpolates or extrapolates as the sole variable the present value of the relative or absolute humidity of the gas from previously determined calibration values at the same constant temperature and/or on the basis of the relative or absolute humidity of the gas and the water vapour partial pressure determines the in each case other humidity value of the gas.

2. Measuring device according to claim 1, **characterized in that** the measuring sensor arrangement comprises a plate-like, highly thermally conductive ceramic support (10), on whose one side is located the capacitive sensor (14) and on whose other side is located the temperature-dependent resistor (12).

3. Measuring device according to claim 1 or 2, **characterized in that** the measuring sensor arrangement carries an envelope (22), which is thermally insulating, but is interrupted or moisture-pervious on the side of the capacitive sensor (14).

4. Measuring device according to one of the claims 1 to 3, **characterized in that** the temperature-dependent resistor (12) is located in a measuring bridge (30), that the power source (24) is constructed as a pulse generator and is connected to the measuring bridge (30) and that the second evaluating circuit (26) is connected on the input side to the bridge diagonals and on the output side is connected to a controller (28), which controls the pulse-interval ratio of the pulse generator.

5. Measuring device according to one of the claims 1 to 3, **characterized in that** the temperature-dependent resistor (12) is located in a measuring bridge (30), that the power source (24) is constructed as a direct voltage or direct current source, that a pulse generator (40) is provided, whose constant amplitude signal is superimposed on the direct voltage or direct current of the power source (24) and is connected to the measuring bridge (30) and that the second evaluating circuit (26) is constructed as a demodulator for the signal of the pulse generator (40) and is connected at the input side to the bridge diagonals and at the output side to a controller (28), which controls the direct voltage or direct current of the power source (24).

6. Measuring device according to one of the claims 1 to 5, **characterized in that** the first evaluating circuit (32) comprises a pulse generator, whose time-determining element is the capacitive sensor (14) and there is a measurement of the pulse frequency or the pulse-interval ratio.

7. Measuring device according to claim 5, **characterized in that** a third evaluating circuit is provided, which determines the control deviation of the controller (28) and by comparison with the previously determined calibration values establishes the gas flow rate.

8. Measuring device according to one of the claims 1 to 7, **characterized in that** a third evaluating circuit is provided, which determines the heating power and by comparison with the previously determined calibration values establishes the gas flow rate.

9. Measuring device according to claim 7 or 8, **characterized in that** the third evaluating circuit is coupled to the first evaluating circuit (32) and the output values of the first evaluating circuit (32) are used for establishing the gas flow rate.

10. Method for determining the water content of a gas with a measuring device comprising a measuring sensor arrangement of a capacitive sensor (14), which is thermally coupled to a heating element and a temperature probe, the capacitive sensor (14) being kept at a constant temperature which is above the dew point and a value for the relative or absolute humidity is established from the water content-dependent capacitance of the capacitive sensor (14), **characterized in that** the heating element and the temperature probe are formed by a common temperature-dependent resistor (12) and that the capacitive sensor (14) is kept at the constant temperature by regulating said resistor (12) and that the value for the relative or absolute humidity is formed by interpolation or extrapolation of the calibration values established beforehand at the same temperature and/or on the basis of the relative or absolute humidity of the gas and the water vapour partial pressure the in each case other gas humidity value is established.

11. Method according to claim 10, **characterized in that** the gas flow rate is established by determining the heating power of the heating element.

12. Method according to claim 11, **characterized in that** the flow rate values are modified whilst taking account of the established humidity values.

## Revendications

1. Dispositif de mesure servant à déterminer la teneur en eau d'un gaz, comprenant un arrangement de capteurs de mesure composé d'un capteur capacitif (14) couplé thermiquement à un élément de chauffage et à une sonde de température, une source d'énergie (24) reliée à l'élément de chauffage, ainsi qu'un premier circuit d'évaluation (32) relié au capteur capacitif (14) et un second circuit d'évaluation (26) relié à la sonde de température, **caractérisé en ce que** l'élément de chauffage et la sonde de température sont formés par une résistance commune (12) variable avec la température, que le second circuit d'évaluation (26) forme avec la résistance (12) variable avec la température et la source d'énergie (24) un circuit de réglage pour la stabilisation de la température du capteur capacitif (14) et que le premier circuit d'évaluation (32) interpole ou extrapole, en fonction de la capacité du capteur capacitif (14), qui est l'unique variable, la valeur actuelle de l'humidité relative ou absolue du gaz à partir de valeurs de calibrage, à la même température constante et/ou détermine respectivement l'autre valeur de l'humidité du gaz sur la base de l'humidité relative ou absolue du gaz et de la pression partielle de la vapeur d'eau.

2. Dispositif de mesure suivant la revendication 1, **caractérisé en ce que** l'arrangement de capteurs de mesure comprend un support en forme de plaque (10) en céramique hautement conductrice de chaleur, sur une face de laquelle est disposé le capteur capacitif (14) et sur l'autre face de laquelle est disposé la résistance 12 variable avec la température.

3. Dispositif de mesure suivant la revendication 1 ou 2, **caractérisé en ce que** l'arrangement de capteurs de mesure porte une enveloppe (22), qui est calorifuge, mais interrompue ou perméable à l'humidité côté capteur capacitif (14).

4. Dispositif de mesure suivant une des revendications 1 à 3, **caractérisé en ce que** la résistance (12) variable avec la température est disposée dans un pont de mesure (30), que la source d'énergie (24) est conçue comme générateur d'impulsions et reliée au pont de mesure (30) et que le second circuit d'évaluation (26) est raccordé, côté entrée, à la diagonale du pont et, côté sortie, au régulateur (28) qui commande l'intervalle d'impulsions du générateur d'impulsions.

5. Dispositif de mesure suivant une des revendications 1 à 3, **caractérisé en ce que** la résistance (12) variable avec la température est disposée dans un pont de mesure (30), que la source d'énergie (24) est conçue comme source de tension continue ou de courant continu, qu'un générateur d'impulsions (40) est prévu, dont le signal d'amplitude constante est superposé à la tension continue ou au courant continu de la source d'énergie (24) et relié au pont de mesure (30) et que le second circuit d'évaluation (26) est conçu comme démodulateur pour le signal du générateur d'impulsions (40) et raccordé, côté entrée, à la diagonale du pont, ainsi que, côté sortie, à un régulateur (28), qui commande la tension continue ou le courant continu de la source d'énergie (24).

6. Dispositif suivant une des revendications 1 à 5, **caractérisé en ce que** le premier circuit d'évaluation (32) comprend un générateur d'impulsions, dont l'élément de fixation du temps est constitué par le capteur capacitif (14) et qu'une mesure de la fréquence des impulsions ou de l'intervalle d'impulsions a lieu.

7. Dispositif de mesure suivant la revendication 5, **caractérisé en ce qu'**un troisième circuit d'évaluation est prévu qui détermine l'erreur de réglage du régulateur (28), ainsi que la vitesse d'écoulement du gaz par comparaison aux valeurs de calibrage préalablement saisies.

8. Dispositif de mesure suivant une des revendications 1 à 7, **caractérisé en ce qu'**un troisième circuit d'évaluation est prévu qui détermine le rendement de chauffage, ainsi que la vitesse d'écoulement du gaz par comparaison aux valeurs de calibrage préalablement saisies.

9. Dispositif de mesure suivant la revendication 7 ou 8, **caractérisé en ce que** le troisième circuit d'évaluation est couplé au premier circuit d'évaluation (32) et que les valeurs de sortie du premier circuit d'évaluation (32) servent à la détermination de la vitesse d'écoulement du gaz.

10. Procédé de détermination de la teneur en eau d'un gaz au moyen d'un dispositif de mesure comprenant un arrangement de capteurs de mesure avec un capteur capacitif (14) couplé thermiquement à un élément de chauffage et à une sonde de température, le capteur capacitif (14) étant maintenu à une température constante, supérieure au point de condensation et une valeur de l'humidité relative ou absolue étant déterminée à partir de la capacité variable avec la teneur en eau, **caractérisé en ce que** l'élément de chauffage et la sonde de température sont formés par une résistance commune (12) variable avec la température, que le capteur capacitif (14) est maintenu à une température constante par réglage de cette résistance (12) et que la valeur de l'humidité relative ou absolue est formée par interpolation ou extrapolation de valeurs de calibrage préalablement déterminées à la même température et/ou que l'autre valeur de l'humidité du gaz est respectivement déterminée sur la base de l'humidité relative ou absolue du gaz et de la pression partielle de la vapeur d'eau.

11. Procédé suivant la revendication 10, **caractérisé en ce que** la vitesse d'écoulement du gaz est déterminée en déterminant le rendement de chauffage de l'élément de chauffage.

12. Procédé suivant la revendication 11, **caractérisé en ce que** les valeurs de la vitesse d'écoulement sont modifiées en tenant compte des valeurs déterminées de l'humidité.
